# EUROPEAN PATENT APPLICATION

(11) **EP 2 682 908 A2**
(43) Date of publication of application: **08.01.2014**
(21) Application number: 11859705.3
(22) Date of filing: 30.12.2011
(51) Int. Cl.: G06Q 30/02

(54) **METHOD FOR PROVIDING AN ADVERTISEMENT USING COLLECTION INFORMATION, SERVER, AND COMPUTER-READABLE RECORDING MEDIUM**

(30) Priority: 02.03.2011 KR 20110018611
(71) Applicant: Intel Corporation, Santa Clara, CA 95054 (US)
(72) Inventor: RYU, Jung Hee, Seoul 134-772 (KR)
(74) Representative: Goddar, Heinz J.
(86) International application number: PCT/KR2011/010387
(87) International publication number: WO 2012/118276

(57) **Abstract**

In accordance with the present invention, there is provided a method for providing advertisement by using collection information comprising of (a) a step in which recognition reference information on an object for sale in connection with a vendor is received, (b) a step in which collection information containing basic recognition information on the object is collected from a user terminal, (c) a step in which the object is recognized by comparing basic recognition information with recognition reference information and statistical information on collection is calculated by referring to information regarding a user and the recognized object; and (d) a step in which advertisement information on a specific object is provided to a specified group of users when selection information on a specific object and a specified group of users is inputted.

## Description

### Technical Field

The present invention relates to a method, a server and a computer-readable recording medium for providing an advertisement by using collection information; and more specifically, to the method, the server and the computer-readable recording medium for allowing a vendor to provide an advertisement which meets the collection tendency of users and allowing a system operator to easily acquire recognition reference information required for recognizing an object by recognizing the object corresponding to basic recognition information by comparing the basic recognition information included in collection information collected from user terminals with the basic recognition information received from a vendor's server, providing the vendor's server with calculated statistical information on collection with reference to information on users of user terminals which transmit the basic recognition information and information recognized for the user terminals of a specific user group if the vendor inputs selection information on the particular object and specific user group with reference to the statistical information.

### Background Technology

Recently, due to the widespread use of the Internet, it has become common to provide information converted in a digital form which was once offered in print form such as books. As the information converted into digital data may be shared and delivered in real time by many users thanks to the spread of the Internet and a 3G network or other high-speed communications systems, it is widely used compared to printed materials, which have a relative shortcoming from the perspective of sharing and information delivery.

In particular, a technology of providing detailed information on an object existing in reality by using an image of the object taken in real time by a user terminal or other recognition information of the object acquired thereby has been recently introduced.

When a variety of services, e.g., services of providing detailed information relating to numerous objects existing in reality as shown above, are provided, it is difficult to effectively store an image taken or other recognition information inputted by the user terminal. Even if a user wants to store only the information on an object with relatively high interest (or high importance) differentially, it is complicated and vexatious to systematically record and store the information. Therefore, it is true that it has certain limits to leading to more active participation of those in demand.

To provide information on an object a user wants and support the information to be systematically recorded and stored, a process for recognizing what the object is must be preceded by referring to recognition information such as an image, a barcode, a quick response (QR) code, a RFID tag, etc. of the object. But as for a service provider who has limited resources, since it is impossible in reality to acquire and manage the recognition information of all objects users want, i.e., all existing objects in the world, and it is particularly difficult to acquire recognition reference information on objects stored on an external database secretly managed by a particular vendor, there may be a problem in which such a service provider cannot provide a service for recognizing the object users want to get information on. Reversely, as for the vendor who sells an object, it is important to get more accurate and more useful information on which user is interested in which object in order to effectively perform marketing, inventory management, etc. However, in general, such information is retained by the service providers, who provide information on objects users want to get, and support such information to be systematically recorded and stored. Accordingly, needs for a technology for allowing the service providers and the vendors to enter into close cooperation with each other to create a leverage effect has emerged.

### Detailed Description of the Invention

### Technical Tasks

It is an object of the present invention to solve all the problems mentioned above.

It is another object of the present invention to allow a vendor to provide an advertisement which meets the collection tendency of users and allowing a system operator to easily acquire recognition reference information required for recognizing an object by recognizing the object corresponding to basic recognition information by comparing the basic recognition information included in collection information collected from user terminals with the basic recognition information received from a vendor's server, providing the vendor's server with calculated statistical information on collection with reference to information on users of user terminals which transmit the basic recognition information and information recognized for the user terminals of a specific user group if the vendor inputs selection information on the particular object and specific user group with reference to the statistical information.

### Means for Solving Tasks

To achieve the above objectives, the representative configuration of the present invention is described below:

In accordance with one aspect of the present invention, there is provided a method for providing advertisements by using collection information comprising of (a) a step in which recognition reference on an object sold or to be sold in relation to a vendor is received from a vendor server, (b) a step in which collection information, including digital data created by taking basic recognition information of the object with a user terminal or by acquiring the basic recognition information through a short distance communication is collected from the user terminal, (c) a step in which the object corresponding to the basic recognition information is recognized by comparing between the basic recognition information included in the digital data in the collection information acquired from the user terminal and the recognition reference information received from the vendor server by referring to the information on the recognized object and a user of the user terminal who remits the basic recognition information, and (d) a step in which the statistical collection information is provided to the vendor server, and advertising information on a particular object is provided for a user terminal included in the selected specific group if the vendor inputs information on selecting the particular object and the specific user group by referring to the statistical collection information.

In accordance with another aspect of the present invention, there is provided a server for providing advertisements by using collection information comprising of a recognition reference information collecting part that receives recognition reference information on an object sold or to be sold in relation to a vendor from the vendor server; a collection information collecting part that collects collection information including digital data created by taking basic recognition information of the object with a user terminal or by acquiring the basic recognition information through a short distance communication; a statistical collection information calculating part that recognizes the object corresponding to the basic recognition information by comparing between the basic recognition information included in the digital data in the collection information acquired from the user terminal and recognition reference information received from the vendor server and calculating statistical collection information by referring to the information on the recognized object and a user of the user terminal who remits the basic recognition information; and an advertising information delivering part that provides the statistical collection information to the vendor server, and provides advertising information on a particular object for a user terminal included in the selected specific group if the vendor inputs information on selecting the particular object and the specific user group by referring to the statistical collection information.

In addition, other methods and systems for implementing the present invention and other computer-readable recording mediums for recording a computer program to run the method are further provided.

### Effects of the Invention

In accordance with the present invention, as it allows a vendor to provide advertisement which meets the collection tendency of users and a system operator to easily acquire recognition reference information required for recognizing an object, a vendor is able to maximize advertisement effects and a system operator effectively is able to provide a more accurate recognition function with respect to an object of the collection target.

In accordance with the present invention, a certain incentive may be provided together with accurate recognition results based on the numerous reference data easily secured by a system operator as long as a user uses his or her user terminal to freely photograph a certain object or acquires information on a certain object through short distance communication so that satisfaction of the user may be maximized to enhance his or her participation rate.

### Brief Description of the Drawings

Figure 1 is a drawing schematically representing a configuration of an entire system to provide an advertisement by using collection information in accordance with an example embodiment of the present invention.
Figure 2 is a drawing schematically illustrating a configuration of a user terminal (100) to support a collection of an object to be performed through a camera module or a short distance communication module of the terminal (100) in accordance with an example embodiment of the present invention.
Figure 3 is a drawing showing an example of a collection page including information on an auto comment and information on an image of the object in accordance with an example embodiment of the present invention.
Figure 4 is a drawing schematically representing a configuration of an advertisement providing server (200) for providing advertisements by using the collection information in accordance with an example embodiment of the present invention.
Figure 5 is a drawing representing an example of recognizing an identity of the object by comparing between basic recognition information and recognition reference information in accordance with an example embodiment of the present invention.

### <Description of Reference Numerals>

100: user terminal
110: collection performing part
120: communication part
130: control part
200: advertisement providing server
210: reference information collecting part
220: collection information collecting part
230: statistical collection information calculating part
240: advertisement information delivering part
250: communication part
260: control part
300: vendor server
310: collection page
320: auto comment
330: image on recognized object
400: general web server
500: communication network

### Forms for Embodiment of the Invention

In the following detailed description of the present invention, reference is made to the accompanying drawings that show specific examples as illustrations in which the present invention may be practiced. These examples are described in sufficient detail to enable those skilled in the art to practice the invention. It is to be understood that the various examples of the invention, although different, are not necessarily mutually exclusive. For example, a particular feature, structure, or characteristic described herein in connection with one example may be implemented within other examples without departing from the spirit and scope of the invention. In addition, it is to be understood that the location or arrangement of individual elements within each disclosed example may be modified without departing from the spirit and scope of the invention. The following detailed description is, therefore, not to be taken in a limiting sense, and the scope of the present invention is defined only by the accompanying claims, if they are appropriately interpreted, along with the full range of equivalents which the claims claim. In the drawings, similar numerals refer to the same or similar functionality throughout the several aspects.

In the following is described the present invention in detail referring to the preferred examples of the present invention so that those having common knowledge of the technical field to which the present invention belongs may easily practice the present invention.

### [Preferred Embodiments of the Invention]

In the present specification, a "collection" is a so-called act of digitally collecting an object in which a user is interested in, and more specifically it may be defined as a process for acquiring basic recognition information (such as a taken image, a tag for a short distance communication or the like) of an object intended to be collected by using a user terminal and transmitting the acquired basic recognition information to a server which performs other subsequent functions (including functions of recognizing the object, creating and storing a collection page, calculating statistical collection information, etc.). For example, an act of a user taking an image of the cover of a book by using the user's terminal and transmitting the taken image to the server to allow information on the book to be collected may fall under the collection with respect to the book.

Furthermore, the "collection" also may indicate not only the above-described process of transmitting the acquired basic recognition information to the server by using the user terminal but also processes of recognizing the object from the basic recognition information and creating and storing a page (so-called the collection page) by combining digital images, including information on an identity of the recognized object (such as a type, a characteristic, etc. thereof), a time when, and a place where, the basic recognition information thereof is acquired, a comment thereof, an image corresponding thereto, etc.

In addition, the "basic recognition information" with respect to the object in the specification means recognition information which becomes a clue for recognizing the object and more particularly, the recognition information actually acquirable by a terminal of a user who intends to collect the object. For instance, an image of an object taken by the user terminal, a name thereof, other recognition codes, a barcode, a quick response (QR) code, information on a radio-frequency identification (RFID) tag and information on a near field communication (NFC) tag acquired by a short distance communication module (non-illustrated) included in the user terminal, information on a location of the object acquired by a location recognition module include in the user terminal and the like may correspond to the basic recognition information.

In addition, the "recognition reference information" with respect to the object in the specification means information to be compared with the basic recognition information in order to recognize what the object corresponding to the basic recognition information acquired by the user terminal is and particularly recognition information created or managed by a vendor who produces or sells the object. For example, an image of the object itself, etc. managed by the vendor, a name thereof, other recognition codes, a barcode, a QR code, an RFID tag, an NFC tag, information on a location where the vendor places the object, etc. may correspond to the recognition reference information.

Furthermore, "short distance communications" in the specification means all available wireless communication technologies for acquiring the basic recognition information having been granted to the object and must be understood as a concept of the broadest meaning which includes radio-frequency identification technology, short distance wireless communication technology, etc.

### Configuration of Entire System

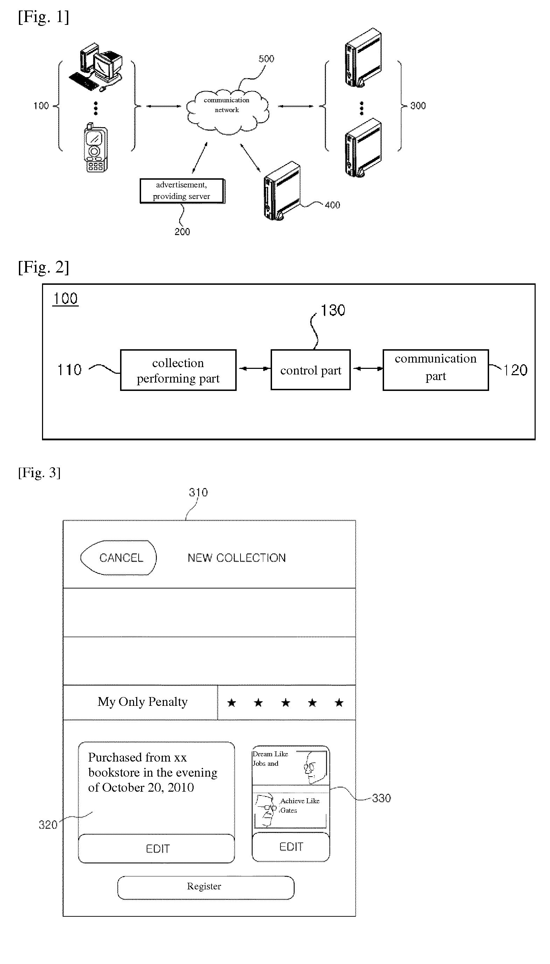

Figure 1 is a drawing schematically representing a configuration of an entire system to provide an advertisement by using collection information in accordance with an example embodiment of the present invention.

As illustrated in Figure 1, the entire system in accordance with an example embodiment of the present invention may comprise of a user terminal (100), an advertisement providing server (200), a vendor server (300), a general web server (400), and a communication network (500). In the specification of the present invention, the vendor server (300) will be treated as a concept of including the vendor terminal (300).

First, the communication network (500) may be configured, regardless of wired or wireless, in a variety of networks, including a local area network (LAN), a metropolitan area network (MAN), a wide area network (WAN), etc.

In accordance with an example embodiment of the present invention, the user terminal (100) may be a digital device which includes a function of allowing the user to access to, and then communicate with, the advertisement providing server (200) or the web server (400) through the communication network (500). Herein, the digital device, such as a personal computer (e.g., desktop, laptop, etc.), a workstation, a PDA, a web pad, a cellular phone, a smart phone, a tablet PC, etc. which is furnished with a memory means and a microprocessor with a calculation ability, may be adopted as the user terminal (100) in accordance with the present invention. An internal configuration of the user terminal (100) will be described later.

Next, the advertisement providing server (200) in accordance with an example embodiment of the present invention may perform a function of recognizing an object corresponding to basic recognition information by comparing between the basic recognition information included in a digital data in collection information collected from the user terminal (100) and recognition reference information received from the vendor server (300), calculating, and providing the vendor server (300) with, statistical collection information by referring to information on the user of the user terminal (100) which transmits the basic recognition information and information on the recognized object, and providing advertising information on a particular object for the user terminal (100) included in a specific user group if the particular object and the specific user group are selected by the vendor server (300). In the following is given a detailed description of an internal configuration of the advertisement providing server (200).

Next, the vendor server (300) in accordance with an example embodiment of the present invention may be a server which includes a function of allowing the vendor to access to, and then communicate with, the advertisement providing server (200). Herein, the digital device, such as a personal computer (e.g., desktop, laptop, etc.), a workstation, a PDA, a web pad, a cellular phone, a smart phone, a tablet PC, etc. which is furnished with a memory means and a microprocessor with a calculation ability, may be adopted as one configuration component of a vendor server (300) or the vendor server (300) in accordance with the present invention. More specifically, the vendor server (300) in accordance with an example embodiment of the present invention may perform a function of transmitting the recognition reference information created and managed for the object manufactured and sold by the vendor to the advertisement providing server (200) and receiving statistical information on the collection performed by the user from the advertisement providing server (200) and also may conduct a function of allowing the vendor to select the particular object and the specific user group which are the targets of advertisement by referring to the statistical information and then transmitting information on the selected particular object and the selected specific user group to the advertisement providing server (200) (Of course, the automatic selection of the specific user group with a highest statistical value may be included in various modified example embodiments). The vendor server (300) may also be a server of the vendor operating a website to provide products or services as well.

Moreover, the general web server (400) in accordance with an example embodiment of the present invention perform communication with the advertisement providing server (200) and/or the user terminal (100) through the communication network (500). For instance, the web server (400) may be a server for operating an internet search portal and the web server (400), at the time, may allow a user to search detailed info elation on the object that the user intends to collect and browse the search result by including a web content search engine (non-illustrated) therein. The detailed information provided as the search result may include various kinds of information on a price, a location, news, knowledge, a community, a website, etc. of the object.

### Configuration of User Terminal

Figure 2 is a drawing schematically illustrating the configuration of a user terminal (100) to support a collection of an object to be performed through a camera module or a short distance communication module of the terminal (100) in accordance with an example embodiment of the present invention.

As illustrated in Figure 2, the user terminal (100) in accordance with an example embodiment of the present invention may include a collection performing part (110), a communication part (120) and a control part (130). In accordance with an example embodiment of the present invention, at least some of the collection performing part (110), the communication part (120) and the control part (130) may be program modules communicating with the user terminal (100). The program modules may be included in the user terminal (100) in the form of an operating system, an application program module and other program modules and may also be stored on many well-known memory devices physically. Furthermore, the program modules may be stored on remote memory devices that enable to communicate with the user terminal (100). The program modules may include, but not be limited to, a routine, a subroutine, a program, an object, a component; and a data structure for executing a specific operation or a type of specific abstract data that will be described later in accordance with the present invention.

First, the collection performing part (110) in accordance with an example embodiment of the present invention may perform a function of acquiring a taken image or information on a tag for a short distance communication as the basic recognition information which is used for a basis of object recognition to be explained later and transmitting such information to the advertisement providing server (200) which performs subsequent functions of recognizing an object, calculating statistical collection information, etc.

More precisely, the collection performing part (110) in accordance with an example embodiment of the present invention may perform a function of receiving a preview of a landscape in real time near the user who carries the user terminal (100) by using a camera module (non-illustrated) such as a CCD camera, furnished in the user terminal (100). In addition, the collection performing part (110) in accordance with an example embodiment of the present invention may conduct a function of acquiring information on a tag for a short distance communication including information on an RFID tag, an NFC tag, etc. of the object by using a short distance communication module (non-illustrated) furnished in the user terminal (100).

Additionally, the collection performing part (110) in accordance with an example embodiment of the present invention may also perform a function of creating a collection page including information on a phrase or a sentence (so-called an auto comment) grammatically combined in a user's language by using the basic recognition information and at least one of a place where, and a time when, the basic recognition information is acquired, information on an image of an object which is a subject of the collection, etc. and, if the request for registering the created collection page is inputted, allowing the collection page to be transmitted to the advertisement providing server (200).

Figure 3 is a drawing showing an example of a collection page including information on an auto comment and information on an image of the object in accordance with an example embodiment of the present invention.

By referring to Figure 3, it may be confirmed that the collection performing part (110) is creating a collection page (310) including an auto comment (320) which is grammatically combined in a user's language by using information on a place ("XX Bookstore") where the image serving as the basic recognition information is created and a time (Oct. 20, 2010) when it is created, and a thumbnail image (330) of the book. Herein, if a request for registering the collection page (310) is received, the collection performing part (110) may allow the collection page (310) of the user to be transmitted.

The collection performing part (110) in accordance with another example embodiment of the present invention may also perform a function of acquiring and transmitting the basic recognition information with respect to the object which is a subject of the collection to the advertisement providing server (200) as well as directly recognizing the identity of the object which is the subject of the collection by comparing between the basic recognition information and the recognition reference information. A configuration of recognizing the identity of the object will be explained in further detail below in the part of "Configuration of Advertisement Providing Server".

Next, the communication part (120) in accordance with an example embodiment of the present invention may perform a function of allowing the user terminal (100) to communicate with an external device.

Lastly, the control part (130) in accordance with an example embodiment of the present invention performs a function of controlling data flow between the collection performing part (110) and the communication part (120). In other words, the control part (130) may control the flow of data from outside or among the components of the user terminal (100) and thereby allow the collection performing part (110) and the communication part (120) to perform their unique functions.

### Configuration of Advertisement Providing Server

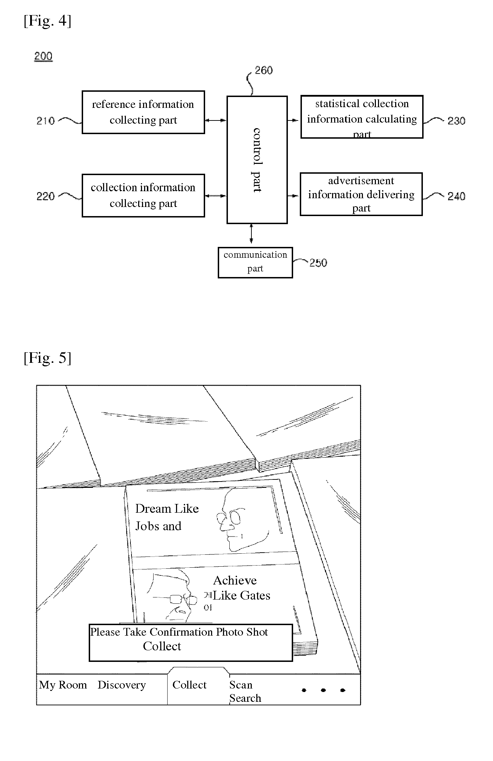

Figure 4 is a drawing schematically representing a configuration of an advertisement providing server (200) for providing advertisement by using the collection information in accordance with an example embodiment of the present invention.

As illustrated in Figure 4, the advertisement providing server (200) in accordance with an example embodiment of the present invention may include a recognition reference information collecting part (210), a collection information collecting part (220), the statistical collection information calculating part (230), an advertisement information delivering part (240), a communication part (250) and a control part (260). In accordance with an example embodiment of the present invention, at least some of the recognition reference information collecting part (210), the collection information collecting part (220), the statistical collection information calculating part (230), the advertisement information delivering part (240), the communication part (250) and the control part (260) may be program modules communicating with the advertisement providing server (200). The program modules may be included in the advertisement providing server (200) in the form of an operating system, an application program module and other program modules and may also be stored on many well-known memory devices physically. Furthermore, the program modules may be stored on remote memory devices that enable to communicate with the advertisement providing server (200). The program modules may include, but not be limited to, a routine, a subroutine, a program, an object, a component, and a data structure for executing a specific operation or a type of specific abstract data that will be described in accordance with the present invention.

First, the recognition reference information collecting part (210) in accordance with an example embodiment of the present invention may perform a function of receiving, and then managing, the recognition reference information on an object sold or to be sold in connection with the vendor from the vendor server (300). As described above, the recognition reference information may mean the information which is compared with the basic recognition information in order to recognize the identity of the object which corresponds to the basic recognition information actually acquired by the user terminal (100). For example, information on an image of an object taken and managed by the vendor, a name granted to the object by the vendor, other recognition codes, a barcode, a QR code, an RFID tag, an NFC tag, a location where the vendor places the object, etc. may be applicable to the recognition reference information, but such recognition reference information may be created and managed by the vendor who mainly produces and sells the object.

By collecting the recognition reference information of the object from the vendor server (300), a collection service provider may be able to acquire the recognition reference information on various objects easily and then utilize the acquired information to perform the object recognition and the collections, instead of spending efforts to create or manage the recognition reference information of the object. In order to easily collect numerous data (i.e., the recognition reference information) the vendor possesses, the service provider, for reference, may allow the vendor to perform targeting advertising by providing the vendors, free of charge, with statistics calculated by the statistical collection information calculating part (230) to be explained later.

On the other hand, the recognition reference information collecting part (210) in accordance with another example embodiment of the present invention may also transmit the recognition reference information collected from the vendor server (300) to the user terminal (100). In case of such example embodiment, it will be possible to allow the user terminal (100) to recognize the identity of the object as a subject of the collection by comparing between the basic recognition information and the recognition reference information.

Next, the collection information collecting part (220) in accordance with an example embodiment of the present invention may perform a function of collecting the collection information including the basic recognition information actually taken and created by using the user terminal (100) or the basic recognition information created as a result of acquisition through a short distance communication technology from the user terminal (100). Herein, the collection information may include the basic recognition information of the object which is a subject of the collection. If the user terminal (100) in accordance with another example embodiment of the present invention performs a further subsequent function of recognizing the object, creating the collection page, etc., the collection information may further include information on the identity of the object as the subject of the collection, a place where, and a time when, the basic recognition information of the object is acquired, a comment inputted by a user or automatically created during the course of the collection, pre-stored image corresponding to the object, etc.

Next, the statistical collection information calculating part (230) in accordance with an example embodiment of the present invention may perform a function of judging which object sold by the vendor the object falling under basic recognition information corresponds to (i.e., the object which is the subject of the collection) by comparing between the basic recognition information included in the collection information collected from the user terminal (100) and the recognition reference information acquired from the vendor server (300) to recognize the identity of the object.

First, assuming that information on an image of an object, the name thereof, other recognition codes, a barcode, a QR code or the like is acquired as the basic recognition information, the statistical collection information calculating part (230) in accordance with an example embodiment of the present invention may perform a function of recognizing the identity of the object by using an object recognition technology, a character recognition technology, a barcode recognition technology, etc.

As an object recognition technology for recognizing a particular object included in images with various angles and various distances, an article entitled, "A Comparison of Affine Region Detectors" authored jointly by K. MIKOLAJCZYK and seven others and published in the "International Journal of Computer Vision" in November 2005 and the like, herein, may be referred to (the whole content of the article may be considered to have been combined herein). To recognize the respective objects shot at different angles as the same object more precisely, the aforementioned article describes how to detect an affine invariant region(s). Of course, the object recognition technology applicable to the present invention is not limited only to the method described in the article and it will be able to reproduce the present invention by applying various modified examples.

Moreover, a certain optical character recognition (OCR) technology for recognizing certain character strings included in the inputted image may refer to the specification of Korea Patent Application No. 2006-0078850, wherein the specification must be considered to have been combined in its entirety. The specification mentions a method for creating each candidate character forming a character string included in the inputted image and performing the character recognition technology to each created candidate character. Herein the OCR technology which is applicable to the present invention is not limited to the method described in the specification but various modified examples may be introduced.

In addition, a technology for recognizing a barcode included in the inputted image may refer to the specification of Korea Patent Registration No. 0791704, wherein the specification must be considered to have been combined in its entirety. The specification describes a method for extracting a barcode field by analyzing the adjacency relationship of connection fields on the basis of the characteristics of the structure of a barcode from the inputted image, determining a unit width which is to be used as a module width of the barcode in accordance with the width of the connection field of black pixel in the extracted barcode field and collating the barcode pattern defined as an arrangement of the magnification of the unit width with the input width pattern to recognize the barcode. Herein the barcode recognition technology which is applicable to the present invention is not limited to the method described in the specification but various modified examples may be introduced.

Next assuming that RFID tag information, NFC tag information, etc. serving as the basic recognition information is acquired from the object by using the short distance communication technology, the statistical collection information calculating part (230) in accordance with an example embodiment of the present invention may perform a function of recognizing the identity of the object by using the short distance communication technology, etc. However, because the technology for recognizing the identity of the object itself corresponds to a well-known technology, the detailed explanation will be omitted herein. If the statistical collection information calculating part (230) recognizes the identity of the object by acquiring the basic recognition information, such as the RFID tag, the NFC tag or the like, from the object by using the short distance communication technology, it may be unnecessary to acquire an image by the collection performing part (110).

Figure 5 is a drawing representing an example of recognizing an identity of the object by comparing between basic recognition information and recognition reference information in accordance with an example embodiment of the present invention.

By referring to Figure 5, if a book entitled, "Dream Like Jobs and Achieve Like Gates" is included in the collected image as the basic recognition information, the statistical collection information calculating part (230) may recognize the object included in the image as the book entitled, "Dream Like Jobs and Achieve Like Gates" by comparing the collected image with recognition reference information in the form of images or the like acquired from the vendor server (300) with the use of technologies such as an objection recognition technology, a character recognition technology and/or a barcode recognition technology. On the other hand, if a near field communication tag is collected as the basic recognition information, the statistical collection information calculating part (230) may recognize the object corresponding to the near field communication tag as the book titled "Dream Like Jobs and Achieve Like Gates" by comparing the collected near field communication tag with recognition reference information in the form of near field communication tags or the like collected from the vendor server (300).

In addition, the statistical collection information calculating part (230) in accordance with an example embodiment of the present invention may perform a function of calculating, and providing the vendor server (300) with, statistical information on a present state of users' collections based on information on users of the user terminals (100) who transmit collection information including the basic recognition information and information on an object (i.e., the object which is a subject of the collection) recognized to correspond with the basic recognition information.

More specifically, the statistical collection information in accordance with an example embodiment of the present invention may include information on the number of collections of an object, a time when, and a place where, the object is collected, demographic information on the users on an anonymous basis, evaluation of the object by users who collect the object, etc. and may be connected with the recognition reference information acquired from the vendor server (300). However, in accordance with the present invention, statistical collection information is not limited only to aforementioned information and any information which may give help in the improvement of an advertising effect of the vendor as information to be acquired during the course of collection or object recognition may be included in statistical collection information in the present invention.

While it was described above that the statistical collection information calculating part (230) performing functions of recognizing the object and calculating the statistics based on information on the recognized object, the functions are not limited only thereto. Of course, such functions may be performed separately by an object recognizing part (non-illustrated) and a statistic calculating part (non-illustrated).

Next, if the vendor inputs information on selecting a particular object and a specific user group by referring to the statistical information provided to himself or itself (i.e., the selected information is transmitted from the vendor server (300)) the advertisement information delivering part (240) in accordance with an example embodiment of the present invention may perform a function of transmitting certain advertisement information on the particular object to a user terminal (100) included in the specific user group. Herein, the advertisement information may include text advertising, image advertising, e-coupons and any other types of advertising. More specifically, the advertisement information may be made by the vendor and the advertisement information delivering part (240) may perform a function to receive the advertisement information from the vendor server (300) and push the information to the user terminal (100) of the specific user group.

In accordance with an example embodiment of the present invention, the advertisement information delivering part (240) may perform a function of delivering the advertisement information only to the user terminals (100) included in the specific group of the users in which the collection is performed, i.e., the location where, and the time when, the basic recognition information is acquired, is used to perform a collection at a specific location or a particular time.

For instance, it may be assumed that the advertisement providing server (200) in the present invention acquires information on barcodes (or QR codes) as the recognition reference information on three objects, i.e., instant noodles A, B and C, from the server (300) of a large discount mart serving as the vendor and a user takes barcodes attached on the instant noodles A, B and C by using his or her terminal (100) to perform the collection. In accordance with an example embodiment of the present invention, if statistical collection information purporting that users who collect the noodle A are mainly men in their 20's is calculated, the large discount mart may select to provide advertisement information on the instant noodle A only for terminal(s) (100) of the male users in their 20's who have collected the instant noodle A or further for terminal(s) (100) of other male users in their 20's (i.e., those who have not performed the collection of the instant noodle A) by referring to the statistical collection information and if statistical collection information purporting that the instant noodle B is mainly collected near Dogok-dong Seoul is calculated, the large discount mart may select to provide advertisement information on the instant noodle B only for terminals (100) of the users who have collected the instant noodle B near Dogok-dong or further for terminals (100) of other users located near Dogok-dong (i.e., those who have not performed collections on the instant noodle B). If statistical collection information purporting that the instant noodle C is collected mainly during the time between 22:00 and 24:00 is calculated, the large discount mart may select to provide advertisement information on the instant noodle C only for terminals (100) of the users who have collected the instant noodle C during the time between 22:00 and 24:00 or further for terminals (100) of other users (those who have not performed collection on the instant noodle C yet) during the time between 22:00 and 24:00.

Next, the communication part (250) in accordance with an example embodiment of the present invention may perform a function of allowing the advertisement providing server (200) in the present invention to communicate with external device.

Lastly, the control part (260) in accordance with an example embodiment of the present invention may perform a function of controlling the flow of data among the recognition reference information collecting part (210), the collection information collecting part (220), the statistical collection information calculating part (230), the advertisement information delivering part (240) and the communication part (250). In other words, the control part (260) may control the flow of data from outside or among the components of the advertisement providing server (200) and thereby allow the recognition reference information collecting part (210), the collection information collecting part (220), the statistical collection information calculating part (230), the advertisement information delivering part (240) and the communication part (250) to perform their unique functions.

The examples described above according to the present invention can be implemented in the form of a program command that may be executed through a variety of computer components and recorded on a computer-readable recording media. The computer readable media may include solely or in combination, program commands, data files and data structures. The program commands recorded on the computer-readable recording medium may be specially designed and configured for the present invention or may be known to and be usable by a person skilled in the field of computer software. Examples of the computer-readable recording medium include magnetic media such as hard disk, floppy disk, and magnetic tape, optical media such as CD-ROM and DVD, magnetic media such as hard disk, floppy disk, magnetic tape, optical media such as CD-ROM and DVD, magneto-optical media such as floptical disk and hardware devices such as ROM, RAM and flash memory specially configured to store and execute program commands. Program commands include not only a machine language code made by a complier but also a high level code that can be used by an interpreter etc., which is executed by a computer. The hardware device may be configured to work as one or more software modules to perform the action according to the present invention, and its reverse is also the same.

While the present invention has been described so far by certain details such as specific components and limited examples and drawings, they were merely provided to promote an overall understanding of the present invention, and the present invention is not limited by the examples above. A person with the common knowledge of the field to which the present invention belongs may attempt various modifications and changes based on such description.

Therefore, the thought of the present invention must not be confined to the explained examples, and the claims to be described later as well as everything including variations equal or equivalent to the claims would belong to the category of the thought of the present invention.

## Claims

1. A method for providing advertisement by using collection information comprising of
(a) a step in which a recognition reference information collecting part receives recognition reference information on an object sold or to be sold in relation to a vendor from a vendor server;
(b) a step in which a collection information collecting part acquires collection information, including digital data created by taking basic recognition information of the object with a user terminal or by acquiring the basic recognition information through a short distance communication;
(c) a step in which a statistical collection information calculating part recognizes the object corresponding to the basic recognition information by comparing between the basic recognition information included in the digital data in the collection information acquired from the user terminal and the recognition reference information received from the vendor server and calculates statistical collection information by referring to the information on the recognized object and a user of the user terminal who remits the basic recognition information; and
(d) a step in which an advertising information delivering part provides advertising information on a particular object for a user terminal included in a specific user group, if the vendor inputs information on selecting the particular object and the specific user group by referring to the statistical collection information; wherein the collection is a process for acquiring the basic recognition information of the particular object the user intends to collect by using his or her user terminal and storing at least a piece of information on an identity of the particular object recognized by the acquired basic recognition information, a place where, and a time when, the basic recognition information thereof is acquired, a comment thereof and an image thereof, and wherein the basic recognition information is recognition information which is a clue for recognizing the identity of the object and wherein the recognition reference information is recognition information to be compared with the basic recognition information to recognize the identity of the object.

2. The method recited in Claim 1, wherein the recognition reference information includes at least a piece of information on an image of the object, a name of the object, other recognition codes, a barcode, a QR code, a tag for a short distance communication of the object acquired by the user terminal, and a location where the basic recognition information was acquired.

3. The method recited in Claim 1, wherein the digital data further includes at least a piece of information on an auto comment including a grammatically combined phrase or sentence in the user's language by using at least a piece of information on the identity of the recognized object and a place where, and a time when, the basic recognition information is obtained and information on pre-stored image of the recognized object.

4. The method recited in Claim 1, wherein the basic recognition information includes at least a piece of information on an image of the object taken by the user terminal, a name of the object, other recognition codes, a barcode, a QR code, a tag for a short distance communication of the object acquired by the user terminal, and a location where the basic recognition information was acquired.

5. The method recited in Claim 1, wherein the statistical collection information includes at least a piece of information on the number of collections of the object, a time when the object is collected, a place where the object is collected, and demographic information on the users of terminals through which the collections of the object are performed on an anonymous basis.

6. The method recited in Claim 1, wherein the advertising information includes information on a coupon issued by the vendor who serves or sells the object.

7. A server for providing advertisement by using collection information, comprising of: a recognition reference information collecting part that receives recognition reference information on an object sold or to be sold in relation to a vendor from the vendor server; a collection information collecting part that collects collection information including digital data created by taking basic recognition information of the object with a user terminal or by acquiring the basic recognition information through a short distance communication; a statistical collection information calculating part that recognizes the object corresponding to the basic recognition information by comparing between the basic recognition information included in the digital data in the collection information acquired from the user terminal and recognition reference information received from the vendor server and calculating statistical collection information by referring to the information on the recognized object and a user of the user terminal who remits the basic recognition information; and an advertising information delivering part that provides advertising information on a particular object for a user terminals included in a specific user group, if the vendor inputs information on selecting the particular object and the specific user group by referring to the statistical collection information; wherein the collection is a process for acquiring the basic recognition information of the particular object the user intends to collect by using his or her user terminal and storing at least a piece of information on an identity of the particular object recognized by the acquired basic recognition information, a place where, and a time when, the basic recognition information thereof is acquired, a comment thereof and an image thereof; and wherein the basic recognition information is recognition information which is a clue for recognizing the identity of the object and wherein the recognition reference information is recognition information to be compared with the basic recognition information to recognize the identity of the object.

8. The server recited in Claim 7, wherein the recognition reference information includes at least a piece of information on an image of the object, a name of the object, other recognition codes, a barcode, a QR code, a tag for a short distance communication of the object acquired by the user terminal, and a location where the basic recognition information was acquired.

9. The server recited in Claim 7, wherein the digital data further includes at least a piece of information on an auto comment including a grammatically combined phrase or sentence in the user's language by using at least a piece of information on the identity of the recognized object and a place where, and a time when, the basic recognition information is obtained and information on pre-stored image of the recognized object.

10. The server recited in Claim 7, wherein the basic recognition information includes at least a piece of information on an image of the object taken by the user terminal, a name of the object, other recognition codes, a barcode, a QR code, a tag for a short distance communication of the object acquired by the user terminal, and a location where the basic recognition information was acquired.

11. The server recited in Claim 7, wherein the statistical collection information includes at least a piece of information on the number of collections of the object, a time when the object is collected, a place where the object is collected, and demographic information on the users of terminals through which the collections of the object are performed on an anonymous basis.

12. The server recited in Claim 7, wherein the advertising information includes information on a coupon issued by the vendor who serves or sells the object.

13. A computer-readable recording medium on which a computer program is recorded to execute the method according to any one of Claim 1 to Claim 6.
